(19) Europäisches Patentamt
European Patent Office
Office européen des brevets

(11) **EP 4 459 509 A1**

(12) **EUROPEAN PATENT APPLICATION**
published in accordance with Art. 153(4) EPC

(43) Date of publication:
06.11.2024 Bulletin 2024/45

(21) Application number: 22915064.4

(22) Date of filing: 29.12.2022

(51) International Patent Classification (IPC):
*G06N 3/08* (2023.01)     *G06F 7/523* (2006.01)

(52) Cooperative Patent Classification (CPC):
G06F 7/523; G06N 3/04; G06N 3/08; G06N 3/082;
Y02D 10/00

(86) International application number:
PCT/CN2022/143418

(87) International publication number:
WO 2023/125815 (06.07.2023 Gazette 2023/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 31.12.2021 CN 202111671612

(71) Applicant: Hangzhou Hikvision Digital
Technology Co., Ltd.
Hangzhou, Zhejiang 310051 (CN)

(72) Inventors:
• CHEN, Rudan
  Hangzhou, Zhejiang 310051 (CN)
• ZHANG, Yuan
  Hangzhou, Zhejiang 310051 (CN)
• XIE, Di
  Hangzhou, Zhejiang 310051 (CN)
• PU, Shiliang
  Hangzhou, Zhejiang 310051 (CN)

(74) Representative: Epping - Hermann - Fischer
Patentanwaltsgesellschaft mbH
Schloßschmidstraße 5
80639 München (DE)

(54) **DATA PROCESSING METHOD AND APPARATUS AND EDGE COMPUTING DEVICE**

(57) Embodiments of the present application provide a data processing method, apparatus and an edge computing device. The method includes: performing a quantization processing on first input data of a neural network to obtain second input data; determining first output data of the neural network according to the second input data and quantized parameters of all of forward calculation parameters of each network layer in the neural network; performing a quantization processing on the first output data to obtain second output data; inputting the second output data into a preset loss function to obtain a first reverse gradient when the neural network is trained; performing a quantization processing on the first reverse gradient to obtain a second reverse gradient; and adjusting the forward calculation parameters in the neural network according to the second reverse gradient and quantized parameters of all of reverse calculation parameters of each network layer in the neural network. By applying the technical solution provided by the embodiments of the present application, the amount of the computation of the neural network can be reduced, and application scenarios of the neural network can be expanded.

Fig.6

## Description

The present application claims the priority to a Chinese patent application No. 202111671612.X filed with the State Intellectual Property Office of People's Republic of China on December 31, 2021 and entitled "Data processing method, apparatus and edge computing device", which is incorporated herein by reference in its entirety.

## Technical Field

The application relates to the field of computer technology, in particular to a data processing method, apparatus and an edge computing device.

## Background

With the development of computer technology, a neural network is widely used in application scenarios such as image denoising, face recognition, and in vivo verification. However, the amount of the computation of the neural network is particularly huge, and the huge amount of the computation limits the application scenarios of the neural network.

## Summary

The purpose of the embodiment of the application is to provide a data processing method, apparatus and an edge computing device, so as to reduce the amount of the computation of a neural network and expand the application scenario of the neural network. The specific technical solution is as follows.

In a first aspect, the embodiment of the present application provides a data processing method, the method includes:

performing a quantization processing on first input data of a neural network to obtain second input data;

determining first output data of the neural network according to the second input data and quantized parameters of all of forward calculation parameters of each network layer in the neural network;

performing a quantization processing on the first output data to obtain second output data;

inputting the second output data into a preset loss function to obtain a first reverse gradient when the neural network is trained;

performing a quantization processing on the first reverse gradient to obtain a second reverse gradient;

adjusting the forward calculation parameters in the neural network according to the second reverse gradient and quantized parameters of all of reverse calculation parameters of each network layer in the neural network.

Optionally, the forward calculation parameters include a weight, and the method further includes:

for each network layer in the neural network, classifying weights corresponding to output channels of the network layer into a group of the weights;

performing a quantization processing on each group of weights respectively based on a maximum value of each group of weights, to obtain quantized parameters and first quantization step corresponding to each group of weights.

Optionally, the method further includes:
for the first quantization step corresponding to each group of weights, performing a quantization processing on the first quantization step according to a fixed point step representation method, respectively, to obtain quantized parameters and second quantization step corresponding to the first quantization step.

Optionally, the forward calculation parameters include a bias parameter, and the method further includes:
performing, for each network layer in the neural network, based on a maximum value of multiple bias parameters in the network layer, a quantization processing on the multiple bias parameters according to the fixed point step representation method, to obtain quantized parameters and the third quantization step corresponding to the bias parameters.

Optionally, the method further includes:

normalizing, for the output data of each network layer, the output data of the network layer to the preset range;

performing, based on a boundary value of the preset range, a quantization processing on the normalized output data according to the fixed point step representation method to obtain the quantized output data and a fourth quantization step;

wherein the output data of the network layer includes the first output data, and when the output data of the network layer is the first output data, the quantized output data is the second output data.

Optionally, the reverse calculation parameters include one or more of a learning rate, a weight attenuation parameter, a momentum hyperparameter (mom. hyperparameter), a weight gradient, a bias parameter gradient, and a boundary value gradient of an activation value.

Optionally, the method further includes:

performing a quantization processing on all parameters in the preset loss function to obtain quantized parameters corresponding to the loss function;

wherein inputting the second output data into the preset loss function to obtain the first reverse gradient, includes: inputting the second output data into a preset loss function to obtain the first inverse gradient based on the second output data and quantized parameters corresponding to the loss function.

Optionally, the network layer includes a convolutional layer (ConvLayer) and a BN (BatchNorm) layer arranged after the convolutional layer;

before determining the first output data of the neural network according to the second input data and quantized parameters of all of the forward calculation parameters of each network layer in the neural network, the method further includes:

combining the BN layer with the convolutional layer to obtain a combined network layer, wherein a weight of the combined network layer is a product of an activation value coefficient of the BN layer and an original weight of the convolutional layer, the bias parameter of the combined network layer is the sum of an original bias parameter of the convolutional layer and an activation value bias coefficient of the BN layer.

In a second aspect, the embodiment of the present application provides a data processing apparatus, the apparatus includes:

a first quantization unit, configured to perform a quantization processing on first input data of a neural network to obtain second input data;

a determining unit, configured to determine first output data of the neural network according to the second input data and quantized parameters of all of forward calculation parameters of each network layer in the neural network;

a second quantization unit, configured to perform a quantization processing on the first output data to obtain second output data;

an inputting unit, configured to input the second output data into a preset loss function to obtain a first reverse gradient when the neural network is trained;

a third quantization unit, configured to perform a quantization processing on the first reverse gradient to obtain a second reverse gradient;

an adjusting unit, configured to adjust the forward calculation parameters in the neural network according to the second reverse gradient and quantized parameters of all reverse calculation parameters of each network layer in the neural network.

Optionally, the forward calculation parameters include a weight, and the apparatus further includes:

a classifying unit, configured to classify, for each network layer in the neural network, weights corresponding to output channels of the network layer into a group of weights;

a fourth quantization unit, configured to perform a quantization processing on each group of weights respectively based on a maximum value of each group of weights, to obtain quantized parameters and a first quantization step corresponding to each group of weights.

Optionally, the fourth quantization unit is further configured to:
perform, for the first quantization step corresponding to each group of weights, a quantization processing on the first quantization step according to a fixed point step representation method, respectively, to obtain quantized parameters and a second quantization step corresponding to the first quantization step.

Optionally, the forward calculation parameters include a bias parameter, and the apparatus further includes:
a fifth quantization unit, configured to perform, for each network layer in the neural network, based on a maximum value of multiple bias parameters in the network layer, a quantization processing on the multiple bias parameters according to the fixed point step representation method to obtain quantized parameters and a third quantization step corresponding to the bias parameters.

Optionally, the apparatus further includes:

a normalizing unit, configured to normalize, for output data of each network layer, the output data of the network layer to a preset range;

a sixth quantization unit, configured to perform, based on a boundary value of the preset range, a quantization processing on the normalized output data according to the fixed point step representation method, to obtain quantized output data and the fourth quantization step;

wherein the output data of the network layer includes the first output data, and when the output data of the network layer is the first output data, the quantized output data is the second output data.

Optionally, the reverse calculation parameters include one or more of a learning rate, a weight attenuation parameter, a momentum hyperparameter, a weight gradient, a bias parameter gradient, and a boundary value gradient of an activation value.

Optionally, the apparatus further includes:

a sixth quantization unit, configured to perform a quantization processing on all parameters in the preset loss function to obtain quantized parameters corresponding to the loss function;
the inputting unit, specifically configured to input the second output data into a preset loss function to obtain the first inverse gradient based on the second output data and the quantized parameters corresponding to the loss function.

Optionally, the network layer includes a convolutional layer and a BN layer arranged after the convolutional layer, the apparatus further includes:
a combining unit, configured to combine the BN layer with the convolutional layer to obtain a combined network layer, before determining the first output data of the neural network according to the second input data and the quantized parameters of all forward calculation parameters of each network layer in the neural network, wherein a weight of the combined network layer is a product of an activation value coefficient of the BN layer and an original weight of the convolutional layer, and a bias parameter of the combined network layer is the sum of an original bias parameter of the convolutional layer and an activation value bias coefficient of the BN layer.

In a third aspect, the embodiment of the present application provides an edge computing device, which includes a processor that supports training and a machine-readable storage medium; wherein the processor stores a neural network, the machine-readable storage medium stores machine executable instructions that can be executed by the processor, which cause the processor to implement any one of the above data processing method steps.

In a fourth aspect, the embodiment of the present application provides a computer-readable storage medium that stores a computer program therein, which when executed by a processor that stores a neural network, implements any one of the above data processing method steps.

The embodiment of the present application further provides a computer program product containing instructions, which, when running on a computer, cause the computer to carry out any one of the above data processing method steps.

Beneficial effects of the embodiments of the present application:
In the technical solution provided in the embodiments of the present application, all of forward and reverse calculation parameters of each network layer in a neural network have been quantized, and the neural network has been compressed to a large extent, input data is processed based on the neural network with fully quantized forward and reverse calculation parameters, thereby greatly reducing the amount of the computation of the neural network, and enabling the neural network to play a good effect even when computing resources or storage resources are limited, as well as expanding the application scenarios of the neural network.

Of course, it is not necessary for any product or method implementing the present application to achieve all the advantages mentioned above simultaneously.

**Brief Description of the Drawings**

In order to more clearly describe the technical solutions of the embodiments of the present application or the prior art, accompanying drawings that need to be used in the embodiments or the prior art will be briefly described below. Obviously, the accompanying drawings described below are for only some of the embodiments of the present application. For those skilled in the art, they may also obtain other embodiments based on these accompanying drawings.

Figure 1 is a schematic diagram of a neural network provided by an embodiment of the present application;

Figure 2 is a schematic diagram of a first flow of a data processing method by an embodiment of the present application;

Figure 3 is a schematic diagram of a second flow of a data processing method provided by an embodiment of the present application;

Figure 4 is a schematic diagram of a first flow of a weight quantization provided by an embodiment of the present application;

Figure 5 is a schematic diagram of a second flow of a weight quantization provided by an embodiment of the present application;

Figure 6 is a schematic diagram of a structure of a neural network provided by an embodiment of the present application;

Figure 7 is a schematic diagram of a structure of a data processing apparatus provided by an embodiment of the present application;

Figure 8 is a schematic diagram of a structure of an edge computing device provided by an embodiment of the present application.

**Detailed Description**

The technical solutions in the embodiments of the present application will be clearly and completely described below with reference to the accompanying drawings in the embodiments of the present application. Obviously, the described embodiments are only some, and not all, of the embodiments of the present application. All other embodiments obtained based on the embodiments of the present application those skilled in the art fall into the scope of protection of the present application.

The following are explanations of terms used in the embodiments of the present application.

Quantization: in a computer, numerical values are saved in different types such as integer or floating-point occupying different bit widths in the computer. For example, a floating-point numerical value (abbreviated as floating-point number) is represented in high-precision 32 bits or 64 bits formats. Within an allowable range of precision loss, a behavior of representing a high-precision floating-point number with a fewer bit (such as 4 bit, 8 bit, or 16 bit) is called quantization.

Fixed point: data is stored and calculated using an integer numerical value (abbreviated as integer).

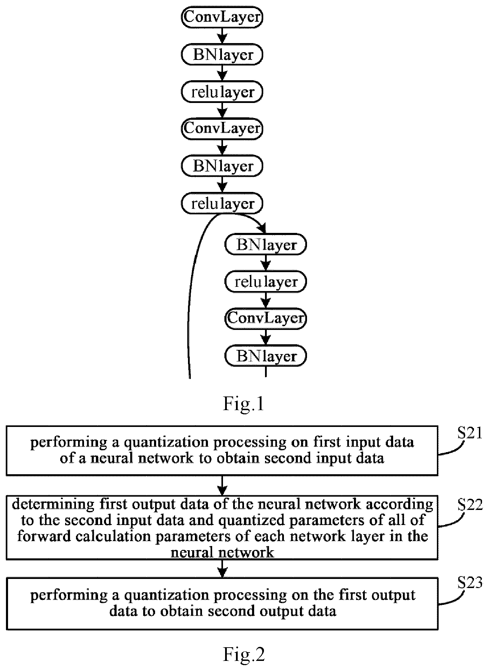

A neural network is composed of one or more different types of network layers, and the different types of network layers perform different function calculations. At present, common network layers include a convolutional layer, a BN (BatchNorm) layer, and a relu layer, etc. A neural network is formed by combining these network layers in a certain order and quantity, as shown in Figure 1.

With the development of computer technology, the neural network is widely used in application scenarios such as image denoising, face recognition, and in vivo verification. However, the amount of the computation of the neural network is particularly huge, and the huge amount of the computation limits the application scenarios of the neural network.

When the computing resources or storage resources of the neural network are limited, the quantization processing method can be used to further reduce the amount of the computation of the neural network.

Quantization processing is a method to discretize numerical values. In other words, an edge computing device uniformly sets continuous numerical values falling within a certain range to specified discrete numerical values. For example, the range of numerical values before a quantization processing can be 0~1.5, etc., and the numerical values after the quantization processing can be 0.2, 1, 1.5, etc.

The purpose of this is that the number of quantization processed numerical values is limited. For example, the edge computing device uses a quantization processing method with a bit width of 4 bits to perform a quantization processing on the numerical values, and only 16 numerical values are used to represent all numerical values within a certain range before the quantization processing. This quantization processing method can greatly reduce the amount of the computation of the neural network.

A numerical value distribution of parameters in the neural network has a certain degree of redundancy, that is, some numerical values of the parameters do not affect a final output of the neural network. In other words, the neural network has a certain tolerance for errors, and the final result would not be affected after changing some numerical values. Therefore, in the field of neural network technology, an operation of quantization processing is feasible, but the goal is definitely to minimize this quantization error as much as possible.

Currently, a quantization processing method includes a floating-point step representation. The specific procedures of the floating-point step representation are as follows: if a floating-point number $X_f$ belongs to a certain value space, an edge computing device performs a quantization on the value space, and the edge computing device can calculate the number 2b used to represent the numerical values in a quantization space according to a specified bit width b (for example, b=4bit), wherein b is the specified bit width. The edge computing device divides a maximum value of the value space by 2b, to get a difference between two numerical values in the quantization space, which is also called a quantization step *step* of the quantization space. $X_f$ is divided by step and the resulting quotient is upward rounded to obtain an integer $X_{int}$, which can be called a fixed point number. The process of obtaining $X_{int}$ can be referred to as a quantization processing.

The integer $X_{int}$ refers to that which numerical value it is among the number of 2b numerical values that can be represented by a specified bit width. In the value space, the quantization-processed numerical value corresponding to $X_{int}$ is $X_{int}*step$, which can be called the inverse quantization value, and the process of obtaining $X_{int}*step$ can also be called an inverse quantization processing.

In addition, the quantization processing method further includes a fixed point step representation method (i.e. Fixed Point). The difference between this fixed point step representation method and the floating-point step representation method is that step in the fixed point step representation method is not obtained by dividing the maximum value in the value space by 2b, but according to the following formula:

$$step=2^{-FL} \qquad\qquad (1)$$

wherein,

$$FL=b-ceil(log_2 Y_f) \qquad\qquad (2)$$

In the above formula, FL represents the bit width of a decimal place of in the floating-point number, b represents the specified bit width, $Y_f$ represents the maximum value in the value space, and the ceil() function is an upward rounding function.

The above formula represents taking a floating-point number as two parts: an integer and a decimal, wherein the decimal represents the quantization step *step,* and the integer represents the fixed point number $X_{int}$. According to the bit width FL of the decimal in the floating-point number, the step is obtained to perform a quantization processing on the floating-point number. In this way, $X_{int}*step$ becomes $X_{int}*2^{-FL}$, while an exponent of 2 can be directly calculated through binary shift, which greatly reduces the amount of the computation of the neural network.

The use of the quantization processing method has been disclosed in related technologies to reduce the amount of the computation of the neural network, but quantized parameters focused on are generally weight and activation value, which limits the reduction in the amount of the computation of the neural network.

To solve the above problem, the embodiment of the application provides a data processing method, as shown in Figure 2, which can be deployed on a processor that supports training, or an edge computing device with training function. The edge computing device can be an edge device such as a camera, a router, etc. For the convenience of understanding, the following description takes the edge computing device as an execution body, which does not play a limiting role. The data processing method includes the following procedures:

Procedure S21, performing a quantization processing on first input data of a neural network to obtain second input data;

In the embodiments of the present application, the neural network can be a convolutional neural network, a deep convolutional neural network, or other neural networks, without limitation.

The edge computing device acquires input data of the neural network as the first input data. The edge computing device performs a quantization processing on the first input data to obtain second input data; The second input data is integer data, therefore, using the second input data can reduce the amount of the computation of the deep neural network.

Procedure S22, determining first output data of the neural network according to the second input data and quantized parameters of all of forward calculation parameters of each network layer in the neural network.

In the embodiment of the present application, the forward calculation parameters may include but are not limited to a weight, an activation value, a bias parameter, and a boundary value of activation value, etc.

The neural network includes one or more network layers. The edge computing device inputs the second input data into a first network layer of the neural network, processes the second input data based on a quantized parameter of the weight of the network layer and a quantized parameter of the bias parameter, to obtain output data of the network layer that is an output activation value, to obtain a quantized parameter of the output data as input data of the next network layer, and circularly executes the procedure of processing the second input data based on the quantized parameter of the weight of the network layer and the quantized parameter of the bias parameter to obtain the output data of the current network layer, and obtaining the quantized parameters of the output data, until obtaining the output data of the last network layer of the neural network as first output data.

In the embodiment of the present application, the quantization method for forward calculation parameters such as a weight, an activation value, a bias parameter, and a boundary value of activation value will be described in detail below, which will not be elaborated here.

Procedure S23, performing a quantization processing on the first output data to obtain second output data.

In the technical solution provided in the embodiment of the present application, the edge computing device quantizes all of the forward calculation parameters of each network layer in the neural network, and compresses the neural network to a large extent, processes the input data based on the neural network with fully quantized forward calculation parameters, thereby greatly reducing the amount of the computation of the neural network, enabling the neural network to play a good effect even when computing resources or storage resources are limited, and expanding the application scenarios of the neural network.

In the technical solution provided by the embodiment of the present application, the edge computing device quantizes the output data of the neural network, which reduces the storage space required for the output data of the neural network, and further exerts the utility of the neural network when computing resources or storage resources are limited.

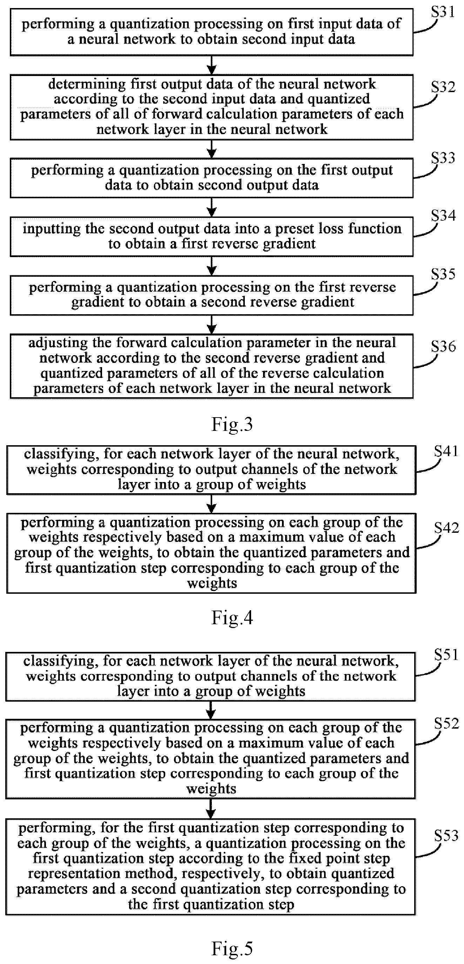

In the embodiment of the present application, the above procedures S21-S23 are forward calculation processes. After the neural network training is completed, the above procedures S21-S23 can be executed. When training neural networks, reverse calculation is also required to update the forward calculation parameter in the neural network. The reverse calculation process can be seen in Figure 3, which is a schematic diagram of a second data processing method provided by the embodiment of the present application. The method may include procedures S31-S36. Wherein procedures S31-S33 are the same as procedures S21-S23 mentioned above, which will not be repeated here.

Procedure S34, inputting the second output data into a preset loss function to obtain a first reverse gradient.

In the embodiment of the present application, in order to achieve the training of the neural network, a loss function is connected at the end of the neural network, i.e., a preset loss function.

For the second output data output by the neural network, the edge computing device inputs the second output data into the preset loss function, and the preset loss function processes the second output data to obtain the first reverse gradient, which is an output data gradient of the last network layer of the neural network, namely an output activation value gradient.

In the embodiment of the present application, in order to improve the training speed, the edge computing device can performing a quantization processing on all of the parameters in the preset loss function (such as normalization parameter, target truth parameter, loss value, etc.) to obtain the quantized parameters corresponding to the loss function. In this case, the procedure S34 mentioned above can be: inputting the second output data into a preset loss function to obtain a first inverse gradient based on the second output data and the quantized parameters corresponding to the loss function.

In the embodiment of the present application, the quantized parameter is integer data, and the preset loss function of all parameters after quantization processing is an integer loss function. By using the quantized parameters corresponding to the integer loss function to process the second output data, the computational efficiency of the loss function can be greatly improved, thereby improving the training speed of the neural network.

Procedure S35, performing a quantization processing on the first reverse gradient to obtain a second reverse gradient.

In the embodiment of the present application, the activation value gradient (i.e., the first reverse gradient) of the network layer is an input activation value gradient of the network layer, and the first reverse gradient is calculated by convolving the output activation value gradient of the network layer with the weight of the network layer. The size of the first reverse gradient is $N \times C_{in} \times H \times W$. Wherein N represents the batchsize of the sample, $C_{in}$ represents the number of input channels in the network layer, H represents the height of the output data, and W represents the width of the output data.

The edge computing device can perform a quantization processing on the first reverse gradient by using the fixed point step representation method. Specifically, the edge computing device finds a maximum vlaue $max_{dA}$ in $N \times C_{in} \times H \times W$ first reverse gradients, and then substitutes $max_{dA}$ into formula (2) to find out that the bit width of the decimal place in the floating-point number can be $FL_{dA}=b-ceil(log_2 max_{dA})$. If it is considered 1 bit is used to represent a number symbol, $max_{dA}$ is substituted into formula (2), to find out that the bit width of the decimal place in the floating-point number can be $FL_{dA}=b-ceil(log_2 max_{dA})-1$.

After determining the bit width $FL_{DA}$ of the decimal place in the floating-point number, by substituting $FL_{DA}$ into formula (1) above, the quantization step $2^{-FL_{dA}}$ corresponding to the first inverse gradient can be obtained.

In the embodiment of the application, the quantization steps $2^{-FL_{dA}}$ corresponding to the first reverse gradient of different network layers can be the same or different. The edge computing device uses $2^{-FL_{dA}}$ of each network layer to obtain the quantized parameter corresponding to the first reverse gradient of each network layer, that is, the second reverse gradient $dA_{int}$, that is, $dA_{int}=dA/2^{-FL_{dA}}$. Wherein dA represents the first reverse gradient.

In the embodiment of the present application, the first reverse gradient can be quantized as an 8-bit second reverse gradient, that is, the quantization bit width of the first reverse gradient can be 8 bits. Taking the quantization bit width of the first reverse gradient being 8 bits as an example, the first reverse gradient can be quantized as $dA_{int\ 8} \times 2^{-FL_{dA}}$.

Procedure S36, adjusting the forward calculation parameter in the neural network according to the second reverse gradient and quantized parameters of all of the reverse calculation parameters of each network layer in the neural network.

In the embodiment of the present application, the reverse calculation parameter may include but are not limited to a weight gradient, an activation value gradient, a bias parameter gradient, and a boundary value gradient of the activation value, etc.

The neural network includes one or more network layers. The edge computing device inputs the second reverse gradient into a reverse first network layer of the neural network , processes the second reverse gradient based on the weight gradient, activation value gradient, bias parameter gradient, and boundary value gradient of the activation value of the network layer, etc., to obtain an input data gradient of the network layer, which is an input activation value gradient, to obtain the quantized parameter of the input data gradient as an output data gradient of a next network layer, circularly executes the procedure of processing the second reverse gradient based on the weight gradient, activation value gradient, bias parameter gradient, and boundary value gradient of the activation value of the network layer, etc., to obtain an input data gradient of the current network layer, and obtaining the quantized parameter of an output data gradient as a next network layer, until obtaining an input data gradient of a reverse last network layer of the neural network.

During processing the second reverse gradient for each network layer, the edge computing device will adjust the forward calculation parameter of the network layer based on the second reverse gradient of the network layer, as well as the weight gradient, activation value gradient, bias parameter gradient, and boundary value gradient of the activation value, etc. of the network layer.

In the embodiment of the present application, the quantization method for reverse calculation parameters such as weight gradient, activation value gradient, bias parameter gradient, and boundary value gradient of activation value, etc., will be described in detail below, and will not be elaborated here.

In the technical solution provided in the embodiments of the present application, the edge computing device quantizes all of the forward and reverse calculation parameters of each network layer in the neural network, and compresses the neural network to a large extent, processes the data (including processes reverse gradients) based on the neural network with fully quantized forward and reverse calculation parameters, thereby greatly reducing the amount of the computation of the neural network, enabling the neural network to play a good effect even when computing resources or storage resources are limited, and expanding the application scenarios of the neural network.

The following is a detailed explanation of the quantization process of forward calculation parameter in the embodiment of the present application.

Firstly, the quantization of weight is introduced, as shown in Figure 4, which is a flow schematic diagram of the weight quantization method provided by the embodiment of the present application, the method may include the following procedures:

Procedure S41, classifying, for each network layer of the neural network, weights corresponding to output channels of the network layer into a group of weights;

In the embodiment of the present application, there are multiple output channels for one network layer, and weights corresponding to one output channel are classified into a group. For example, the size of the weights of one network layer can be expressed as $C_{out} \times C_{in} \times K_H \times K_W$. Wherein, $C_{out}$ represents the number of the output channels in the network layer, $C_{in}$ represents the number of input channels in the network layer, $K_H$ represents the height of the convolutional kernel, and Kw represents the width of the convolutional kernel. Considering the specificity of neural network channels, all weights of the network layer can be grouped according to the direction of the output channel, and can be classified into $C_{out}$ groups. The number of weights in each group is $C_{in} \times K_H \times K_W$, and the $C_{in} \times K_H \times K_W$ weights in each group share one first quantization step $\alpha$.

Procedure S42, performing a quantization processing on each group of weights respectively based on a maximum value of each group of weights, to obtain the quantized parameters and first quantization step corresponding to each group of weights.

In the embodiment of the application, the edge computing device can use the floating-point step representation method or the fixed point step representation method to perform a quantization processing on each group of weights, which is not limited specifically to the quantization processing method.

Optionally, taking the fixed point step representation method used in the quantization processing method as an example, the edge computing device finds the maximum value maxw in each group of weights, and then substitutes maxw into formula (2) to find out the bit width of the decimal place in the floating-point number $FL_W = b\text{-}ceil(\log_2 max_W)$. If it is considered that 1 bit is used to represent a number symbol, maxw is substituted into formula (2) to find out that the bit width of the decimal place in the floating-point number can be $FL_W = b\text{-}ceil(\log_2 max_W)\text{-}1$.

After determining the bit width FLw of the decimal place in the floating-point number, by substituting FLw into formula (1) above, the first quantization step $\alpha$ corresponding to the a group of weight being $2^{-FLw}$ can be obtained. The edge computing device uses the first quantization step $\alpha$ of each network layer to obtain a quantized parameter $W_{int}$ corresponding to the weight of each network layer, that is, $W_{int} = W/\alpha$, wherein W represents the weight.

The edge computing device can also use floating-point step representation method to perform a quantization processing on each group of weights, while the first quantization step obtained is a floating-point number. In order to further reduce the amount of the computation of the neural network and compress it further, the embodiment of the present application provides a weight quantization method as shown in Figure 5, which may include procedures S51-S53, wherein procedures S51-S52 are the same as procedures S41-S42 above.

Procedure S53, performing, for the first quantization step corresponding to each group of weights, a quantization processing on the first quantization step according to the fixed point step representation method, respectively, to obtain quantized parameters and a second quantization step corresponding to the first quantization step.

In the embodiment of the present application, the first quantization step $\alpha$ can be a floating-point number, in order to reduce the amount of the computation of the neural network, the edge computing device can perform a quantization processing to $\alpha$. For each group of weights, the edge computing device will substitute the first quantization step $\alpha$ corresponding to the group of the weights into formula (2) to find out the bit width $FL_{\alpha} = b\text{-}ceil(\log_2 \alpha)$ the decimal place in the floating-point number. If it is considered that 1 bit is used to represent the number symbol, the first quantization step $\alpha$ is substituted into formula (2), to find out that the bit width of the decimal place in the floating-point number can be $FL_{\alpha} = b\text{-}ceil(\log_2 \alpha)\text{-}1$.

After determining the bit width $FL_{\alpha}$ of the decimal place in the floating-point number, by substituting $FL_{\alpha}$ into formula (1) above, the second quantization step $2^{-FL\alpha}$ corresponding to the first quantization step $\alpha$ can be obtained. The edge computing device uses the second quantization step $2^{-FL\alpha}$ of each network layer, to obtain the quantized parameter $\alpha_{int}$ corresponding to the first quantization step $\alpha$, i.e. $\alpha_{int} = \alpha/2^{-FL\alpha}$.

In the embodiments of the present application, the weights can be quantized as weights of 4 bits or 8 bits, etc., i.e. the quantization bit width of the weight can be 4 bits or 8 bits, etc. The first quantization step can be quantized as a quantization step of 16 bits or 32 bits, that is, the quantization bit width of the first quantization step can be 16 bits. Taking the quantization bit width of the weight as 4 bits and the quantization bit width of the first quantization step being 16 bits as an example, the weight can be quantized as $W_{int\ 4} \times \alpha_{int\ 16} \times 2^{-FL\alpha}$.

The quantization for a bias parameter is as follows:

For each network layer in the neural network, based on the maximum value of multiple bias parameters in the network layer, performing a quantization processing on the multiple bias parameters according to the fixed point step representation method, to obtain the quantized parameters and the third quantization step corresponding to the bias parameters.

In the embodiments of the present application, the size of the bias parameters is generally $C_{out}$, and the number of bias parameters is relatively small, so the quantization method is relatively simple, and the fixed point step representation method can be directly used for quantization processing. Specifically, the edge computing device finds the maximum $max_{bias}$ in $C_{out}$ bias parameters, and then substitutes $max_{bias}$ into formula (2) to find out the bit width $FL_{bias} = b\text{-}ceil(\log_2 max_{bias})$ of the decimal place in the floating-point number. If it is considered that 1 bit is used to represent the number symbol, $max_{bias}$ is substituted into formula (2) to find out that the bit width of the decimal place in the floating-point number can be $FL_{bias}=b-ceil(log_2 max_{bias})-1$.

In the embodiment of the present application, multiple bias parameters of each network layer share a third quantization step of $2^{-FLbias}$. After determining the bit width $FL_{bias}$ of the decimal place in the floating-point number, by substituting $FL_{bias}$ into formula (1) above, the third quantization step $2^{-FLbias}$ corresponding to the bias parameters can be obtained. The edge computing device uses $2^{-FLbias}$ of each network layer to obtain the quantized parameter $bias_{int}$ corresponding to the bias parameter, $bias_{int}=bias/2^{-FLbias}$, wherein bias represents the bias parameter.

In the embodiment of the present application, due to the small number of bias parameters, the quantization bit width of the bias parameters can be 16 bits or 32 bits. Taking the quantization bit width of the bias parameter being 16 bits as an example, the bias parameter can be quantized as $bias_{int\ 16} \times 2^{-FLbias}$.

The quantization for the output activation value (i.e., output data) for each network layer is as follows:
in the embodiment of the present application, the input data of each network layer is the output data of the previous network layer. Therefore, performing a quantization processing on the output data of each network layer in the neural network is sufficient.

For the output data of each network layer, the output data of the network layer can be normalized to a preset range; based on the boundary value of the preset range, the normalized output data is quantization processed according to the fixed point step representation method, to obtain the quantized output data and the fourth quantization step; wherein, the output data of the network layer includes the above first output data, when the output data of the network layer is the above first output data, the quantized output data is the second output data.

For a convolutional layer with one parameter quantity of $C_{out} \times C_{in} \times K_H \times K_W$, the size of its output data (i.e. activation value) is generally $N \times C_{out} \times H \times W$, wherein N represents the batchsize of the sample, H represents the height of the output data, and W represents the width of the output data. Here, the edge computing device uses the same quantization step for all of the output data of the network layer.

In the embodiment of the present application, the edge computing device can normalize the output data to a preset range. That is to say, a boundary value clip_val is added, which is also referred to as the boundary value of the activation value. The use of clip_val is to limit all of the output data values to a range, that is, to set upper and lower boundary on the output data numerical values. This method can be called range clipping method.

The formula for the edge computing device to normalize the output data to the preset range is as follows:

$$f(x) = \begin{cases} -\text{clip\_val}, & x < -\text{clip\_val} \\ x, & -\text{clip\_val} \le x \le \text{clip\_val} \\ \text{clip\_val}, & x > \text{clip\_val} \end{cases} \quad (3)$$

wherein, x can be understood as a certain value in $N \times C_{out} \times H \times W$ output data, f(x) is the value obtained after normalizing the output data, clip_val is the boundary value of the activation value, that is, the boundary value of the preset range. clip_val can be set according to actual needs, as long as clip_val and -clip_val are within the range of output data value, without any limitation.

After normalizing the output data of the network layer to the preset range, the maximum value of the output data of the network layer is clip_val. In this case, the edge computing device performs a quantization processing on the normalized output data based on the boundary value of the preset range and according to the fixed point step representation method, to obtain the quantized output data and the fourth quantization step;

The edge computing device substitutes clip_val into formula (2), and calculates the bit width $FL_A=b-ceil(log_2 max_A)$ of the decimal place in the floating-point number. If it is considered that 1 bit is used to represent the number symbol, clip_val is substituted into formula (2) to find out that the bit width of the decimal place in the floating-point number can be $FL_A=b-ceil(log_2 max_A)-1$.

In the embodiment of the present application, the output data of each network layer shares a fourth quantization step of $2^{-FL_A}$. After determining the bit width $FL_A$ of the decimal place in the floating-point number, by substituting $FL_A$ into formula (1) above, the fourth quantization step $2^{-FL_A}$ corresponding to the output data can be obtained. The edge computing device uses $2^{-FL_A}$ of each network layer, to obtain the quantization parameter corresponding to the output data $A_{int}$ (i.e. quantized output data), $A_{int}=A/2^{-F_A}$, wherein A represents the output data.

In the embodiment of the present application, due to the addition of a range clipping operation, when calculating the gradient in reverse, it is necessary to calculate the gradient of the operation, as follows:

$$\frac{df(x)}{dclip\_val} = \begin{cases} -1, & x < -clip\_val \\ 0, & -clip\_val \le x \le clip\_val \\ 1, & x > clip\_val \end{cases} \quad (4)$$

$$\frac{df(x)}{dx} = \begin{cases} 0, & x < -clip\_val \\ 1, & -clip\_val \le x \le clip\_val \\ 0, & x > clip\_val \end{cases} \quad (5)$$

Through the above embodiments, the quantization effect of the output data is great.

In the embodiment of the present application, the quantization bit width of the output data can be 8 bits or 16 bits, etc. Taking the quantization bit width of the output data being 8 bits as an example, the output data can be quantized as $A_{int\,8} \times 2^{-FL_A}$.

In the embodiment of the present application, the edge computing device can further directly quantize the output data, that is, by finding the maximum value from multiple output data and substituting it into formulas (1) and (2) above, the fourth quantization step corresponding to the output data can be obtained. The edge computing device uses the fourth quantization step of each network layer to obtain the quantized parameter $A_{int}$ corresponding to the output data. The embodiments of the present application do not limit the quantization of output data.

The following is a detailed explanation of the quantization of reverse calculation parameter in the embodiment of the present application.

For the quantization of the reverse activation value gradient, it can be referred to the relevant description in procedure S35 above, which will not be repeated here.

An optimizer is preset in the edge computing device. The edge computing device uses the optimizer to update the forward calculation parameter based on the reverse activation value gradient, the learning rate, the weight attenuation parameter, the momentum hyperparameter, etc.

In the optimizer, updating algorithms for forward calculation parameter can include but are not limited to SGD (Stochastic Gradient Descent) algorithm, or ADAM (Adaptive Momentum Estimation) algorithm, etc., without limitation.

Taking the SGD algorithm as an example, the formula for the SGD algorithm is as follows:

$$dW_t = dW + wd \times W_{t-1} + momentum \times dW_{t-1} \quad (7)$$

wherein, Wt represents the forward calculation parameter of the network layer at time t, $W_{t-1}$ represents the forward calculation parameter of the network layer at time (t-1), dWt represents the gradient of the forward calculation parameter of the network layer at time t, $dW_{t-1}$ represents the gradient of the forward calculation parameter of the network layer at time (t-1), and dW is the gradient of the forward calculation parameter of the network layer.

When the forward calculation parameter is a weight, dW can be calculated by convolving the output data gradient dA of the network layer with the input data. When the forward calculation parameter is a bias parameter, dW can be calculated by summing the output data gradients dA of the network layer, wherein $lr$ is the learning rate, wd is the weight attenuation parameter, and $momentum$ is the momentum hyperparameter.

The forward calculation parameter can be a weight, a bias parameter, or a boundary value of an activation value. Based on Formulas (6) and (7), the edge computing device can use the learning rate, the weight attenuation parameter and the momentum hyperparameter of the neural network to update the weight, bias parameter, boundary value of activation value and other forward calculation parameters of the network layer respectively.

The quantization for the learning rate is as follows:
the edge computing device substitutes $lr$ into formula (2), to calculate the bit width of the decimal place in the floating-point number to be $FL_{lr}$=b-ceil(log$_2$$lr$). If it is considered 1 bit is used to represent the number symbol, lr is substituted into formula (2) to find out that the bit width of the decimal place in the floating-point number can be $FL_{lr}$=b-ceil(log$_2$$lr$)-1.

After determining the bit width $FL_{lr}$ of the decimal place in the floating-point number, by substituting $FL_{lr}$ into formula (1) above, the quantization step $2^{-FL_{lr}}$ corresponding to the learning rate can be obtained. The edge computing device uses the $2^{-FL_{lr}}$ of each network layer to obtain the quantized parameter $lr_{int}$ corresponding to the learning rate, that is, $lr_{int} = lr/2^{-FL_{lr}}$.

The quantization for the weight attenuation parameter is as follows:

the edge computing device substitutes wd into formula (2), to calculate the bit width of the decimal place in the floating-point number to be $FL_{wd}=b-ceil(log_2wd)$. If it is considered 1 bit is used to represent the number symbol, wd is substituted into formula (2) to find that the bit width of the decimal place in the floating-point number can be $FL_{wd}=b-ceil(log_2wd)-1$.

After determining the bit width $FL_{wd}$ of the decimal place in the floating-point number, by substituting $FL_{wd}$ into formula (1) above, the quantization step $2^{-FLwd}$ corresponding to the weight attenuation parameter can be obtained. The edge computing device uses the $2^{-FLwd}$ of each network layer to obtain the quantized parameter $wd_{int}$ corresponding to the weight attenuation parameter, that is, $wd_{int}=wd/2^{-FLwd}$.

The quantization for the momentum hyperparameter is as follows:

the edge computing device substitutes *momentum* into formula (2), to calculate the bit width of the decimal place in the floating-point number to be $FL_{mom}=b-ceil(log_2mom)$. If it is considered 1 bit is used to represent the number symbol, *momentum* is substituted into formula (2) to find out that the bit width of the decimal place in the floating-point number can be $FL_{mom}=b-ceil(log_2mom)-1$.

After determining the bit width $FL_{mom}$ of the decimal place in the floating-point number, by substituting $FL_{mom}$ into formula (1) above, the quantization step $2^{-FLmom}$ corresponding to the momentum hyperparameter can be obtained. The edge computing device uses $2^{-FLmom}$ of each network layer to obtain the quantized parameter *momentum*$_{int}$ corresponding to the momentum hyperparameter, that is, *momentum*$_{int}$=*momentum*$/2^{-FLmom}$.

In the embodiment of the present application, the quantization bit width of the learning rate, the weight attenuation parameter, and the momentum hyperparameter can be 16 bits or 32 bits, etc. Taking the quantization bit width of the learning rate, the weight attenuation parameter and the momentum hyperparameter as 16bit, the learning rate, the weight attenuation parameter and the momentum hyperparameter can be quantized as $C_{int\ 16}\times2^{-FLc}$. Wherein C is *lr*, *wd* or *momentum*.

The quantization for the weight gradient is as follows:

the size of the weight gradient is the same as that of the weight, that is $Cout\times C_{in}\times K_H\times K_W$, $C_{out}\times C_{in}\times K_H\times K_W$ weight gradients share one quantization step.

The specific quantization is as follows: the edge computing device finds the maximum $max_{dW}$ in $C_{out}\times C_{in}\times K_H\times K_W$ weight gradients, and then substitutes maxaw into formula (2) to find out the bit width $FL_{dW}=b-ceil(log_2max_{dW})$ of the decimal place in the floating-point number. If it is considered 1 bit is used to represent the number symbol, $max_{dW}$ is substituted into formula (2) to find out that the bit width of the decimal place in the floating-point number can be $FL_{dW}=b-ceil(log_2max_{dW})-1$.

After determining the bit width FLaw of the decimal place in the floating-point number, by substituting FLaw into formula (1) above, the quantization step $2^{-FLdW}$ corresponding to the weight gradient can be obtained. The edge computing device uses the $2^{-FLdW}$ of each network layer to obtain the quantized parameter $dW_{int}$ corresponding to the weight gradient, that is, $dW_{int}=dW12^{-FLdW}$, wherein dW represents the weight gradient.

In the embodiment of the present application, the quantization bit width of the weight gradient can be 16 bits or 32 bits, etc. Taking the quantization bit width of the weight gradient being 16 bits as an example, the weight gradient can be quantized as $dW_{int\ 16}\times2^{-FLdW}$.

The quantization for the bias parameter gradient is as follows:

the gradient update method of the bias parameter is the same as that of the weight. See the above update of the weight gradient for the specific quantization of the bias parameter gradient.

In the embodiment of the present application, the quantization bit width of the bias parameter gradient can be 32 bits or 64 bits, etc. Taking the quantization bit width of the bias parameter gradient being 32 bits as an example, the bias parameter gradient can be quantized as $dbias_{int\ 32}\times2^{-FLdbias}$, wherein $dbias_{int\ 32}$ represents the quantized parameter corresponding to the bias parameter gradient, and $2^{-FLdbias}$ represents the quantization step corresponding to the bias parameter gradient.

The quantization for the boundary value gradient of the activation value is as follows:

the gradient update method of the boundary value of the activation value (such as the above clip_val) is the same as that of the weight. See the above update of weight gradient for the specific quantization of the boundary value gradient of the activation value.

In the embodiment of the present application, the quantization bit width of the boundary value gradient of the activation value can be 32 bits or 64 bits, etc. Taking the quantization bit width of the boundary value gradient of the activation value being 32 bits as an example, the bias parameter gradient can be quantized as $dclip_{int\ 32}\times2^{-FLdclip}$, wherein $dclip_{int\ 32}$ represents the quantized parameter corresponding to the boundary value gradient of the activation value, and $2^{-FLdclip}$ represents the quantization step corresponding to the boundary value gradient of the activation value.

Based on the quantization of the above learning rate, weight attenuation parameter, momentum hyperparameter, weight gradient, bias parameter gradient and the boundary value gradient of the activation value, the above procedure S36 can be: adjusting the weight, the bias parameter and/or the boundary value of the activation value of each network layer in the neural network according to the second reverse gradient, as well as the quantized parameters of the learning rate, the weight attenuation parameter, the momentum hyperparameter, the weight gradient, the bias parameter gradient and the boundary value gradient of the activation value of each network layer in the neural network.

In one embodiment of the present application, if the neural network deploys the convolutional layer, and deploys the BN layer after the convolutional layer. In order to reduce the quantization of the BN layer and reduce the quantization loss, before procedure S22, combining the BN layer and the convolutional layer, to obtain the combined network layer, wherein the weight of the combined network layer is the product of the activation value coefficient of the BN layer and the original weight of the convolutional layer, the bias parameter of the combined network layer is the sum of the original bias parameter of the convolutional layer and the activation value bias coefficient of the BN layer.

In the embodiment of the present application, the calculation method in the BN layer is as follows:

$$y = \alpha \times \left( \frac{x\text{-mean}}{std} \right) + \beta \qquad (8)$$

wherein, y is the output data of the BN layer, which can also be called an output activation value, and x is the input data of the BN layer, which can also be called an input activation value, $\alpha$ and $\beta$ are preset coefficients, mean is a mean value of the activation value, and std is a variance of the activation value.

The edge computing device trains the neural network, and after training is completed, $\alpha$, $\beta$, mean, and std become fixed values. At this time, formula (8) is equivalent to a linear transformation, that is, formula (8) can be transformed into the following formula:

$$y = \frac{\alpha}{std} \times x - \frac{\alpha \times \text{mean}}{std} + \beta \qquad (9)$$

In formula (9) above, $\alpha$/std can be referred to as an activation value coefficient of the BN layer. The edge computing device directly multiplies the activation value coefficient of the BN layer and the original weight of convolutional layer, to obtain the weight of the combined network layer.

In formula (9) above, $-(\alpha \times \text{mean})/std + \beta$ is the activation value bias coefficient of the BN layer. The edge computing device directly adds the activation value bias coefficient of the BN layer to the original bias parameter of the convolutional layer, to obtain the bias parameter of the combined network layer.

In the technical solution provided in the embodiment of the present application, since the activation value coefficient and the activation value bias coefficient in the BN layer are fixed values, the edge computing device combines the original weight and original bias parameter in the convolutional layer with the activation value coefficient and the activation value bias coefficient in the BN layer, which is equivalent to that the edge computing device combines the BN layer into the convolutional layer. In this way, when the neural network processes data, it omits the calculation of the BN layer, thereby reducing the amount of the computation of the neural network, and expanding application scenarios of the neural network.

In addition, the edge computing device combines the BN layer into the convolutional layer. In this case, if the edge computing device performs a quantization processing on the parameter of the neural network to further reduce the amount of the computation of the neural network, since the BN layer is combined into the convolutional layer, the edge computing device can reduce the quantization processing of the BN layer without reducing the computational efficiency, and reduce the quantization loss, thus ensuring the training performance accuracy required by the neural network.

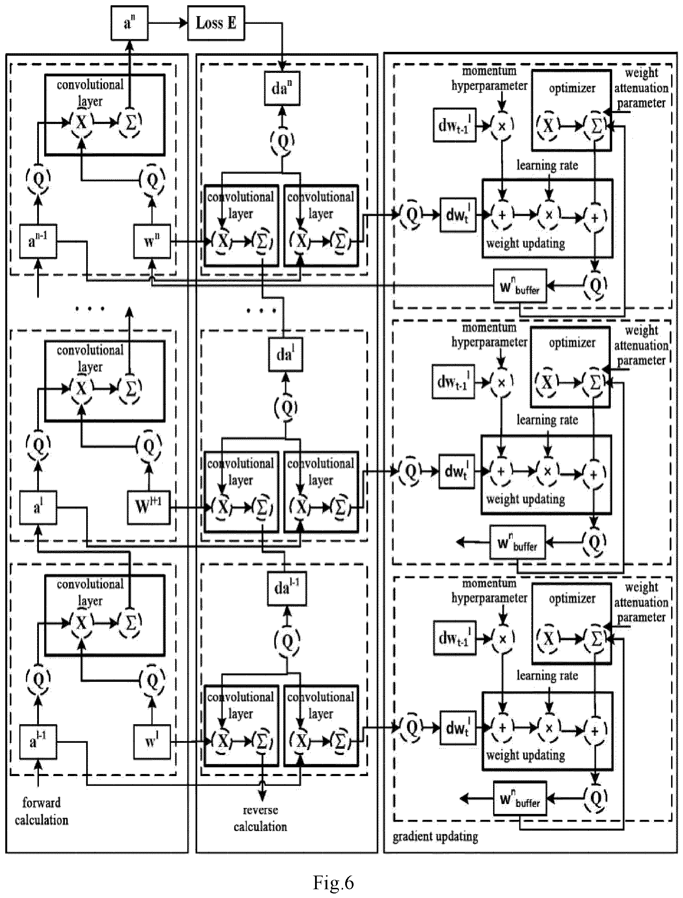

The following provides a detailed explanation of the data processing method provided by the embodiment of the present application, in conjunction with the schematic diagram of the neural network structure shown in Figure 6. In Figure 6, Q represents a quantization processing operation, a represents input or output data, W represents a weight, da represents an input or output data gradient, dW represents a weight gradient, and $W_{\text{buffern}}$ represents a convolution parameter after quantization processing.

Forward calculation part: the input data $a_{l-1}$ of the neural network is quantization processed in the forward calculation part, and then combined with the weight $W_l$ that is also quantization processed for convolution operation in the convolutional layer to obtain the output data az of the current layer. The edge computing device takes $a_l$ as the input data of the next network layer, and performs the above operations in turn, until the output data $a_n$ of the neural network is obtained at the output layer of the neural network.

Reverse calculation part: the edge computing device inputs $a_n$ into the loss function Loss E, to obtain the output data gradient $da_n$ in the reverse calculation part corresponding to $a_n$. After the edge computing device performs a quantization processing on $da_n$, it convolves the quantization processed $da_n$ with the weight of the network layer to obtain the input data gradient corresponding to the input data of the network layer. The edge computing device takes the input data gradient as the output data gradient corresponding to the output data of the next network layer, and performs the above operations in turn, until the input gradient is output at the output layer of the neural network.

Wherein there are gradient updating in each layer of the neural network. In the gradient update part, the edge computing device updates the weight of the network layer according to the learning rate, the weight attenuation parameter and the momentum super parameter of the neural network.

Based on the embodiment shown in Figure 6, the embodiment of the present application quantizes all of the parameters involved in neural network computation, achieving low bit quantization across the entire network. This can not only compress the neural network to a large extent, but also improve the training efficiency of the neural network while maintaining the required training performance accuracy.

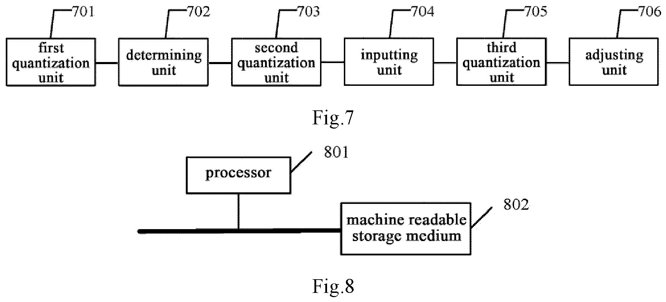

Corresponding to the above data processing method, the embodiment of the present application further provides a data processing apparatus, as shown in Figure 7, which includes:

a first quantization unit 701, configured to perform a quantization processing on first input data of a neural network to obtain second input data;

a determining unit 702, configured to determine first output data of the neural network according to the second input data and quantized parameters of all of forward calculation parameters of each network layer in the neural network;

a second quantization unit 703, configured to perform a quantization processing on the first output data to obtain second output data;

an inputting unit 704, configured to input the second output data into a preset loss function to obtain a first reverse gradient when the neural network is trained;

a third quantization unit 705, configured to perform a quantization processing on the first reverse gradient to obtain a second reverse gradient;

an adjusting unit 706, configured to adjust the forward calculation parameter in the neural network according to the second reverse gradient and quantized parameters of all of reverse calculation parameters of each network layer in the neural network.

Optionally, the forward calculation parameter includes a weight, and the above data processing apparatus may further include:

a classifying unit, configured to classify the weights corresponding to output channels of the network layer into a group of weights for each network layer in the neural network;

a fourth quantization unit, configured to perform a quantization processing on each group of weights respectively based on a maximum value of each group of weights, to obtain quantized parameters and first quantization step corresponding to each group of weights.

Optionally, the fourth quantization unit may be further configured to:
perform a quantization processing on the first quantization step according to a fixed point step representation method respectively for the first quantization step corresponding to each group of weights, to obtain the quantized parameters and a second quantization step corresponding to the first quantization step.

Optionally, the forward calculation parameter includes a bias parameter, and the above data processing apparatus may further include:
a fifth quantization unit, configured to perform a quantization processing on the multiple bias parameters according to the fixed point step representation method for each network layer in the neural network, based on the maximum value of multiple bias parameters in the network layer, to obtain the quantized parameters and a third quantization step corresponding to the bias parameters.

Optionally, the above data processing apparatus may further include:

a normalizing unit, configured to normalize the output data of the network layer to the preset range for the output data of each network layer;

a sixth quantization unit, configured to perform a quantization processing on the normalized output data according to the fixed point step representation method based on the boundary value of the preset range, to obtain the quantized output data and a fourth quantization step;

wherein the output data of the network layer includes the first output data, and when the output data of the network layer is the first output data, the quantized output data is the second output data.

Optionally, the reverse calculation parameters include one or more of a learning rate, a weight attenuation parameter, a momentum hyperparameter, a weight gradient, a bias parameter gradient, and a boundary value gradient of an activation value.

Optionally, the above data processing apparatus may further include:

a sixth quantization unit, configured to perform a quantization processing on all parameters in the preset loss function to obtain the quantized parameter corresponding to the loss function;

the inputting unit 704, specifically configured to input the second output data into the preset loss function, to obtain a first inverse gradient based on the second output data and the quantized parameters corresponding to the loss function.

Optionally, the network layer includes a convolutional layer and a BN layer arranged after the convolutional layer; in this case, the above data processing apparatus may further include:

a combining unit, configured to combine the BN layer with the convolutional layer to obtain a combined network layer before determining the first output data of the neural network based on the second input data and the quantized parameters of all of the forward calculation parameters of each network layer in the neural network, wherein the weight of the combined network layer is the product of the activation value coefficient of the BN layer and the original weight of the convolutional layer, and the bias parameter of the combined network layer is the sum of the original bias parameter of the convolutional layer and the activation value bias coefficient of the BN layer.

In the technical solution provided by the embodiments of the present application, all forward and reverse calculation parameters of each network layer in the neural network have been quantized, and the neural network has been compressed to a large extent, the input data is processed based on the neural network with fully quantized forward and reverse calculation parameters, thereby greatly reducing the amount of the computation of the neural network, enabling the neural network to play a good effect even when computing resources or storage resources are limited, and expanding the application scenarios of the neural network.

Corresponding to the above data processing method, the embodiment of the present application further provides an edge computing device, as shown in figure 8, which includes a processor 801 that supports training and a machine-readable storage medium 802; the processor 801 stores a neural network, the machine-readable storage medium 802 stores machine executable instructions that can be executed by the processor 801, which cause the processor 801 to implement any one of the above data processing method steps.

The machine-readable storage medium may include a Random Access Memory (RAM) or a Non-Volatile Memory (NVM), such as at least one disk storage. Optionally, the machine-readable storage medium can also be at least one storage device located far away from the aforementioned processor.

The above processor can be a general-purpose processor, including a Central Processing Unit (CPU), a Network Processor (NP), etc.; it can also be a Digital Signal Processor (DSP), an Application Specific Integrated Circuit (ASIC), a Field-Programmable Gate Array (FPGA) or other programmable logic devices, discrete gates or transistor logic devices, or discrete hardware components.

In the above embodiment, it can be realized in whole or in part by software, hardware, firm ware or any combination thereof. When implemented by software, it can be realized in the form of computer program products in whole or in part in the form of a computer program product. The computer program product includes one or more computer instructions. When the computer program instructions are loaded and executed on the computer, the flows or functions described in the embodiment of the present application are generated in whole or in part. The computer can be a general purpose computer, a special purpose computer, a computer network, or other programmable devices. The computer instructions can be stored in a computer-readable storage medium, or transferred from one computer-readable storage medium to another computer-readable storage medium. For example, the computer instructions can be transferred from a website, a computer, a server or a data center to another website, computer, server or data center by wire (such as coaxial cable, optical fiber, digital subscriber line (DSL)) or wirelessly (such as infrared, wireless, microwave, etc.). The computer-readable storage medium can be any available medium that can be accessed by a computer or a data storage device including a server, a data center and the like integrated with one or more available media. The available media can be magnetic media (such as floppy disk, hard disk, magnetic tape), optical media (such as, DVD), or solid state disk (SSD), etc.

It should be noted that in this article, relational terms such as first and second are only to distinguish one entity or operation from another, and do not necessarily require or imply any actual relationship or order between these entities or operations. Moreover, the terms "include", "comprise", or any other variation thereof are intended to encompass a non-exclusive inclusion, such that a process, method, article, or device that includes a series of elements not only includes those elements, but also other elements that are not explicitly listed, or also include elements inherent in such a process, method, article, or device. Without further limitations, the elements limited by the statement "including one..." do not exclude the existence of other identical elements in the process, method, article, or device that includes the elements.

The various embodiments in this specification are described in a relevant manner, and the same and similar parts between the various embodiments can be referred to each other, and each embodiment focuses on the differences from other embodiments. In particular, for the embodiments of apparatus, edge computing device, storage media and computer program product, since the description is basically similar to the embodiments of methods, it is relatively simple, and the relevant points can be referred to the partial description of the embodiment of the method.

The above descriptions are only preferred embodiments of the present application, and are not intended to limit the scope of protection of the present application. Any modifications, equivalent replacements, improvements, etc. made within the spirit and principles of the present application shall be included within the scope of protection of the present application.

## Claims

1.  A data processing method, comprising:

    performing a quantization processing on first input data of a neural network to obtain second input data;
    determining first output data of the neural network according to the second input data and quantized parameters of all of forward calculation parameters of each network layer in the neural network;
    performing a quantization processing on the first output data to obtain second output data;
    inputting the second output data into a preset loss function to obtain a first reverse gradient when the neural network is trained;
    performing a quantization processing on the first reverse gradient to obtain a second reverse gradient;
    adjusting the forward calculation parameters in the neural network according to the second reverse gradient and quantized parameters of all of reverse calculation parameters of each network layer in the neural network.

2.  The method according to claim 1, wherein the forward calculation parameters comprise a weight, the method further comprises:

    classifying, for each network layer in the neural network, weights corresponding to output channels of the network layer into a group of weights;
    performing a quantization processing on each group of weights respectively based on a maximum value of each group of weights, to obtain quantized parameters and a first quantization step corresponding to each group of weights.

3.  The method according to claim 2, wherein the method further comprises:
    performing, for the first quantization step corresponding to each group of weights, a quantization processing on the first quantization step according to a fixed point step representation method, respectively, to obtain quantized parameters and a second quantization step corresponding to the first quantization step.

4.  The method according to claim 1, wherein the forward calculation parameters comprise a bias parameter, the method further comprises:
    performing, for each network layer in the neural network, based on a maximum value of multiple bias parameters in the network layer, a quantization processing on the multiple bias parameters according to the fixed point step representation method, to obtain quantized parameters and a third quantization step corresponding to the bias parameters.

5.  The method according to claim 1, wherein the method further comprises:

    normalizing, for output data of each network layer, the output data of the network layer to a preset range;
    performing, based on a boundary value of the preset range, a quantization processing on normalized output data according to the fixed point step representation method, to obtain quantized output data and a fourth quantization step;

wherein the output data of the network layer comprises the first output data, and when the output data of the network layer is the first output data, the quantized output data is the second output data.

6. The method according to claim 1, wherein the reverse calculation parameters comprise one or more of a learning rate, a weight attenuation parameter, a momentum hyperparameter, a weight gradient, a bias parameter gradient, and a boundary value gradient of an activation value.

7. The method according to claim 1, wherein the method further comprises:

performing a quantization processing on all parameters in the preset loss function to obtain quantized parameters corresponding to the loss function;
wherein inputting the second output data into the preset loss function to obtain the first reverse gradient, comprises:
inputting the second output data into a preset loss function, to obtain the first inverse gradient based on the second output data and quantized parameters corresponding to the loss function.

8. The method according to claim 1, wherein the network layer comprises a convolutional layer and a BatchNorm, BN, layer arranged after the convolutional layer;
before determining the first output data of the neural network according to the second input data and the quantized parameters of all of the forward calculation parameters of each network layer in the neural network, the method further comprises:
combining the BN layer with the convolutional layer to obtain a combined network layer, wherein a weight of the combined network layer is a product of an activation value coefficient of the BN layer and an original weight of the convolutional layer, a bias parameter of the combined network layer is a sum of an original bias parameter of the convolutional layer and an activation value bias coefficient of the BN layer.

9. A data processing apparatus, comprising:

a first quantization unit, configured to perform a quantization processing on first input data of a neural network to obtain second input data;
a determining unit, configured to determine first output data of the neural network according to the second input data and quantized parameters of all forward calculation parameters of each network layer in the neural network;
a second quantization unit, configured to perform a quantization processing on the first output data to obtain second output data;
an inputting unit, configured to input the second output data into a preset loss function to obtain a first reverse gradient when the neural network is trained;
a third quantization unit, configured to perform a quantization processing on the first reverse gradient to obtain a second reverse gradient;
an adjusting unit, configured to adjust the forward calculation parameters in the neural network according to the second reverse gradient and quantized parameters of all of reverse calculation parameters of each network layer in the neural network.

10. The apparatus according to claim 9, wherein the forward calculation parameters comprise a weight, the apparatus further comprises:

a classifying unit, configured to classify, for each network layer in the neural network, weights corresponding to output channels of the network layer into a group of weights;
a fourth quantization unit, configured to perform a quantization processing on each group of weights respectively based on a maximum value of each group of weights, to obtain the quantized parameters and a first quantization step corresponding to each group of weights.

11. The apparatus according to claim 10, wherein the fourth quantization unit is further configured to:
perform, for the first quantization step corresponding to each group of weights, a quantization processing on the first quantization step according to a fixed point step representation method, respectively, to obtain the quantized parameters and a second quantization step corresponding to the first quantization step.

12. The apparatus according to claim 9, wherein the forward calculation parameters comprise a bias parameter, the apparatus further comprises:
a fifth quantization unit, configured to perform, for each network layer in the neural network, based on a maximum value of multiple bias parameters in the network layer, a quantization processing on the multiple bias parameters according to the fixed point step representation method to obtain the quantized parameters and a third quantization step corresponding to the bias parameters.

13. The apparatus according to claim 9, wherein the apparatus further comprises:

a normalizing unit, configured to normalize, for output data of each network layer, the output data of the network layer to a preset range;
a sixth quantization unit, configured to perform, based on a boundary value of the preset range, a quantization processing on normalized output data according to the fixed point step representation method, to obtain quantized output data and a fourth quantization step;
wherein the output data of the network layer comprises the first output data, and when the output data of the network layer is the first output data, the quantized output data is the second output data.

14. The apparatus according to claim 9, wherein the reverse calculation parameters comprise one or more of a learning rate, a weight attenuation parameter, a momentum hyperparameter, a weight gradient, a bias parameter gradient, and a boundary value gradient of an activation value.

15. The apparatus according to claim 9, wherein the apparatus further comprises:

a sixth quantization unit, configured to perform a quantization processing on all parameters in the preset loss function to obtain quantized parameters corresponding to the loss function;
the inputting unit, specifically configured to input the second output data into a preset loss function, to obtain the first inverse gradient based on the second output data and the quantized parameters corresponding to the loss function.

16. The apparatus according to claim 9, wherein the network layer comprising a convolutional layer and a BatchNorm, BN, layer arranged after the convolutional layer; the apparatus further comprises:
a combining unit, configured to combine the BN layer with the convolutional layer to obtain a combined network layer, before determining the first output data of the neural network according to the second input data and the quantized parameters of all of the forward calculation parameters of each network layer in the neural network, wherein a weight of the combined network layer is a product of an activation value coefficient of the BN layer and an original weight of the convolutional layer, and a bias parameter of the combined network layer is a sum of an original bias parameter of the convolutional layer and an activation value bias coefficient of the BN layer.

17. An edge computing device, which comprises a processor that supports training, wherein the processor stores a neural network, which is a network generated based on the method according to any one of claims 1-8.

Fig.1

| | |
|---|---|
| performing a quantization processing on first input data of a neural network to obtain second input data | S21 |
| determining first output data of the neural network according to the second input data and quantized parameters of all of forward calculation parameters of each network layer in the neural network | S22 |
| performing a quantization processing on the first output data to obtain second output data | S23 |

Fig.2

| performing a quantization processing on first input data of a neural network to obtain second input data | S31 |

| determining first output data of the neural network according to the second input data and quantized parameters of all of forward calculation parameters of each network layer in the neural network | S32 |

| performing a quantization processing on the first output data to obtain second output data | S33 |

| inputting the second output data into a preset loss function to obtain a first reverse gradient | S34 |

| performing a quantization processing on the first reverse gradient to obtain a second reverse gradient | S35 |

| adjusting the forward calculation parameter in the neural network according to the second reverse gradient and quantized parameters of all of the reverse calculation parameters of each network layer in the neural network | S36 |

Fig.3

| classifying, for each network layer of the neural network, weights corresponding to output channels of the network layer into a group of weights | S41 |

| performing a quantization processing on each group of the weights respectively based on a maximum value of each group of the weights, to obtain the quantized parameters and first quantization step corresponding to each group of the weights | S42 |

Fig.4

| classifying, for each network layer of the neural network, weights corresponding to output channels of the network layer into a group of weights | S51 |

| performing a quantization processing on each group of the weights respectively based on a maximum value of each group of the weights, to obtain the quantized parameters and first quantization step corresponding to each group of the weights | S52 |

| performing, for the first quantization step corresponding to each group of the weights, a quantization processing on the first quantization step according to the fixed point step representation method, respectively, to obtain quantized parameters and a second quantization step corresponding to the first quantization step | S53 |

Fig.5

Fig.6

| | | | | | |
|---|---|---|---|---|---|
| 701 | 702 | 703 | 704 | 705 | 706 |
| first quantization unit | determining unit | second quantization unit | inputting unit | third quantization unit | adjusting unit |

Fig.7

processor — 801

machine readable storage medium — 802

Fig.8

## INTERNATIONAL SEARCH REPORT

International application No.

**PCT/CN2022/143418**

### A. CLASSIFICATION OF SUBJECT MATTER

G06N3/08(2023.01)i;G06F7/523(2006.01)i

According to International Patent Classification (IPC) or to both national classification and IPC

### B. FIELDS SEARCHED

Minimum documentation searched (classification system followed by classification symbols)

G06N G06F

Documentation searched other than minimum documentation to the extent that such documents are included in the fields searched

Electronic data base consulted during the international search (name of data base and, where practicable, search terms used)

CNTXT, ENTXTC, VEN, VCN: 量化, 神经网络, 输入, 参数, 权重, 正向, 反向, 调整, 修正, 调节, quantize, neural network, weight, parameter, update, correct, backpropagation, backward, pass

### C. DOCUMENTS CONSIDERED TO BE RELEVANT

| Category* | Citation of document, with indication, where appropriate, of the relevant passages | Relevant to claim No. |
|---|---|---|
| A | US 2020134448 A1 (GOOGLE L.L.C.) 30 April 2020 (2020-04-30) description, paragraphs [0018]-[0034] and [0063]-[0078] | 1-17 |
| A | WO 2021179587 A1 (BEIJING MEGVII TECHNOLOGY CO., LTD.) 16 September 2021 (2021-09-16) entire document | 1-17 |

☐ Further documents are listed in the continuation of Box C.　　☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **16 March 2023** | **22 March 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

INTERNATIONAL SEARCH REPORT
Information on patent family members

| Patent document cited in search report | | | Publication date (day/month/year) | Patent family member(s) | Publication date (day/month/year) |
|---|---|---|---|---|---|
| US | 2020134448 | A1 | 30 April 2020 | None | |
| WO | 2021179587 | A1 | 16 September 2021 | None | |

International application No.

**PCT/CN2022/143418**

Form PCT/ISA/210 (patent family annex) (July 2022)

**REFERENCES CITED IN THE DESCRIPTION**

**Patent documents cited in the description**

- CN 202111671612X